# EUROPÄISCHE PATENTSCHRIFT

(11) **EP 2 822 829 B1**
(45) Veröffentlichungstag und Bekanntmachung des Hinweises auf die Patenterteilung: **20.04.2016**
(21) Anmeldenummer: 13705923.4
(22) Anmeldetag: 23.02.2013
(51) Int. Cl.: B60W 10/04, B60W 10/119, B60W 10/22, B60W 30/02, B60W 40/02

(54) **FAHRERASSISTENZSYSTEM FÜR EIN KRAFTFAHRZEUG**
DRIVER ASSISTANCE SYSTEM FOR A MOTOR VEHICLE
SYSTÈME D'AIDE À LA CONDUITE POUR VÉHICULE À MOTEUR

(30) Priorität: 10.03.2012 DE 102012004929
(43) Veröffentlichungstag der Anmeldung: 14.01.2015
(73) Patentinhaber: Audi AG, 85045 Ingolstadt (DE)
(72) Erfinder: BÄR, Michael, 85049 Ingolstadt (DE); SIEDERSBERGER, Karl-Heinz, 86669 Königsmoos (DE)
(74) Vertreter: Thielmann, Frank
(86) Internationale Anmeldenummer: PCT/EP2013/000532
(87) Internationale Veröffentlichungsnummer: WO 2013/135342

(56) Entgegenhaltungen:
- WO-A1-2009/027801
- DE-A1-102009 026 994
- FR-A1- 2 933 184
- US-A1- 2009 326 761
- AOKI Y ET AL: "Experimental demonstration of body slip angle control based on a novel linear observer for electric vehicle", INDUSTRIAL ELECTRONICS SOCIETY, 2005. IECON 2005. 31ST ANNUAL CONFERENCE OF IEEE, IEEE, PISCATAWAY, NJ, USA, 6. November 2005 (2005-11-06), Seiten 2614-2619, XP010876327, DOI: 10.1109/IECON.2005.1569320 ISBN: 978-0-7803-9252-6

## Beschreibung

Die Erfindung betrifft ein Fahrerassistenzsystem für ein Kraftfahrzeug, mit einem wenigstens eine Zustandsgröße des Kraftfahrzeugs steuernden oder regelnden Fahrdynamikregler.

Kraftfahrzeug weisen mittlerweile üblicherweise ein oder mehrere Fahrdynamikregelsysteme auf, denen jeweils ein oder mehrere Sensoren zugeordnet sind. Diese Sensoren erfassen Sensorsignale, die für die Steuerung oder Regelung mittels eines Fahrdynamikreglers benutzt werden. Auf diese Weise können unterschiedliche Systeme beeinflusst werden, dazu zählen eine Stabilitätssteuerung, eine Geschwindigkeitsregelung, ein Fahrwerkregelsystem, eine Lenkungssteuerung, eine Motorsteuerung und dergleichen.

Aus dem gattungsbildenden Dokument WO 2009/027801 is ein Fahrerassistenzsystem bekannt.

In der DE 10 2006 042 961 A1 wird ein Fahrzeugsteuersystem vorgeschlagen, das eine Reihe von Sensoren aufweist, um anhand der Sensorsignale ein Steuersignal zu erzeugen. Die Sensoren sind in der Lage Kenngrößen des Fahrzeugs zu erfassen.

Aus der DE 10 2009 017 473 A1 ist ein Fahrerassistenzsystem bekannt, das im aktivierten Zustand Driftbewegungen erlaubt, die normalerweise durch ein Stabilitätsprogramm oder dergleichen verhindert werden.

Eine Driftbewegung eines Fahrzeugs zeichnet sich dadurch aus, dass ein Winkelunterschied zwischen der Längsachse des Fahrzeugs und dessen Geschwindigkeitsvektor vorhanden ist. Das Fahrzeug bewegt sich somit seitlich zu seiner Längsachse.

Derzeit übliche Fahrdynamikregelsysteme, die auch als "elektronisches Stabilitätsprogramm" oder ähnlich bezeichnet werden, sind eher konservativ parametriert, da Fahrzeugdrifts von vielen Fahrern ohne besondere Übung nicht beherrscht werden. Andererseits sind Driftbewegungen in bestimmten Situationen durchaus möglich, ohne dass die Gefahr eines Unfalls oder einer Kollision droht.

Der Erfindung liegt daher die Aufgabe zugrunde, ein Fahrerassistenzsystem für ein Kraftfahrzeug anzugeben, durch das Driftbewegungen ermöglicht werden.

Zur Lösung dieser Aufgabe ist bei einem Fahrerassistenzsystem der eingangs genannten Art erfindungsgemäß vorgesehen, dass es so ausgebildet ist, dass bei der Steuerung oder Regelung durch den Fahrdynamikregler von fahrzeugeigenen Sensoren bereitgestellte Umfelddaten berücksichtigt werden, um eine Driftbewegung des Kraftfahrzeugs zu erlauben und zu steuern.

Der Erfindung liegt die Erkenntnis zugrunde, dass mittels einer vorausschauenden Umfeldsensorik von dem Fahrdynamikregler festgelegte Bereiche, in denen das Fahrzeug ohne Gefahr betrieben werden kann, situationsabhängig geändert werden können, so dass die Kontrollmöglichkeiten des Fahrers über das Fahrzeug erhöht werden. Wenn die Auswertung der Umfelddaten ergeben hat, dass auch bei einer Überschreitung der "normalen" Bereiche oder Grenzen, die von dem Fahrdynamikregler festgelegt worden sind, keine gefährliche Situation entsteht, kann eine vom Fahrer ausgelöste oder gesteuerte Driftbewegung erlaubt werden, ebenso könnte auch durch den Fahrdynamikregler ein Drift initiiert werden. Dazu steuert der Fahrdynamikregler einen oder mehrere Aktoren einer Fahrzeugkomponente, beispielsweise eine Lenkungskomponente, eine Fahrwerkkomponente, eine Dämpferkomponente, eine Motorkomponente, eine Antriebskomponente oder dergleichen.

Das erfindungsgemäße Fahrerassistenzsystem ermöglicht somit das situationsabhängige Überschreiten vorgegebener Bereiche oder Grenzwerte, um das Kraftfahrzeug sportlicher und agiler zu bewegen, sofern das aktuelle Umfeld des Kraftfahrzeugs dies gefahrlos erlaubt. Wesentlich ist dabei, dass die dem Fahrdynamikregler bereitgestellten Umfelddaten von fahrzeugeigenen Sensoren stammen, somit kann das erfindungsgemäße Fahrerassistenzsystem weitgehend mittels ohnehin vorhandener Hardware implementiert werden, wodurch sich Vorteile hinsichtlich des benötigten Bauraums und der Kosten ergeben. Das erfindungsgemäße Fahrerassistenzsystem weist somit den Vorteil auf, dass Sensoren, die anderen Fahrerassistenzsystemen zugeordnet sind, zusätzlich für das erfindungsgemäße Fahrerassistenzsystem hilfreich sind. Dadurch ergibt sich ein Synergieeffekt, der die Verbreitung derartiger Fahrerassistenzsysteme fördert.

Bei dem erfindungsgemäßen Fahrerassistenzsystem kann es vorgesehen sein, dass das Kraftfahrzeug wenigstens einen der folgenden Umfelddaten erfassenden Sensoren umfasst: eine Kamera, um Bildaufnahmen des Umfelds des Kraftfahrzeugs zu erstellen, einen Laser, einen Radarsensor, einen Ultraschallsensor, um andere Verkehrsteilnehmer, insbesondere Fahrzeuge, im Umfeld des eigenen Kraftfahrzeugs zu erfassen und gegebenenfalls zu verfolgen, sowie ein Navigationsgerät mit einer digitalen Karte und einem Empfänger für die Signale von Satelliten, um die aktuelle Position des Kraftfahrzeugs zu bestimmen. Durch die Verknüpfung von Karteninformationen mit Umfeld- bzw. Verkehrsinformationen lassen sich vielfältige Erkenntnisse gewinnen. Anhand der von dem Navigationsgerät gelieferten Informationen kann beispielsweise erkannt werden, dass sich das Fahrzeug auf einer sehr breiten Straße, z. B. einer Straße mit mehreren Fahrbahnen befindet. Wenn gleichzeitig die Kamera oder ein Radarsignal die Information liefert, dass gegenwärtig keine weiteren Verkehrsteilnehmer vorhanden sind, kann der Fahrdynamikregler die normalerweise für eine Driftbewegung geltenden Grenzen erhöhen oder nach der Gabe eines entsprechenden Steuerbefehls durch den Fahrer selbst eine Driftbewegung auslösen.

Gemäß einer Weiterbildung des erfindungsgemäßen Fahrerassistenzsystems kann es vorgesehen sein, dass es zum Bestimmen eines befahrbaren Bereichs des aktuellen Umfelds ausgebildet ist, der von dem Fahrdynamikregler berücksichtigt wird. Anhand der erfassten Umfelddaten wird eine konsistente Repräsentation des Umfelds erzeugt, von der der befahrbare Bereich abgeleitet werden kann. Dieser kann in Abhängigkeit des Straßenverlaufs, des Kurvenradius, der Anwesenheit von Gegenverkehr, der Straßenbreite, der Geschwindigkeit und weiterer Größen variieren. Basierend auf diesem ermittelten befahrbaren Bereich erfolgt die Steuerung oder Regelung eines Stellglieds oder Aktors durch den Fahrdynamikregler.

Eine Weiterbildung der Erfindung sieht vor, dass der Fahrdynamikregler zum Steuern oder Regeln der wenigstens einen Fahrzustandsgröße mit wenigstens einem der folgenden Systeme zusammenwirkt: einem adaptiven Dämpfersystem (ADS), einem steuerbaren Allradantrieb, einem elektronischen Stabilitätsprogramm (ESP) oder einer Motorsteuerung. Dementsprechend bestehen vielfältige Eingriffsmöglichkeiten, um das Kraftfahrzeug bzw. eine Fahrzustandsgröße zu beeinflussen. Indem das Fahrerassistenzsystem zum Verändern von Parametern oder Grenzwerten des mit dem Fahrdynamikregler zusammenwirkenden System in Abhängigkeit der Umfelddaten ausgebildet ist, kann eine Driftbewegung des Kraftfahrzeugs erlaubt oder gesteuert werden. In diesem Zusammenhang kann es beispielsweise vorgesehen sein, dass Eingriffsgrenzen von Fahrzeugsystemen situationsabhängig erhöht werden. Wenn jedoch diese Grenzen überschritten werden, erfolgt eine Aktivierung bzw. ein Einschreiten eines Fahrerassistenzsystems, beispielsweise des elektronischen Stabilitätsprogramms, um eine gefährliche Situation oder eine Kollision zu vermeiden.

Daneben betrifft die Erfindung ein Kraftfahrzeug. Das erfindungsgemäße Kraftfahrzeug zeichnet sich dadurch aus, dass es ein Fahrerassistenzsystem der beschriebenen Art aufweist.

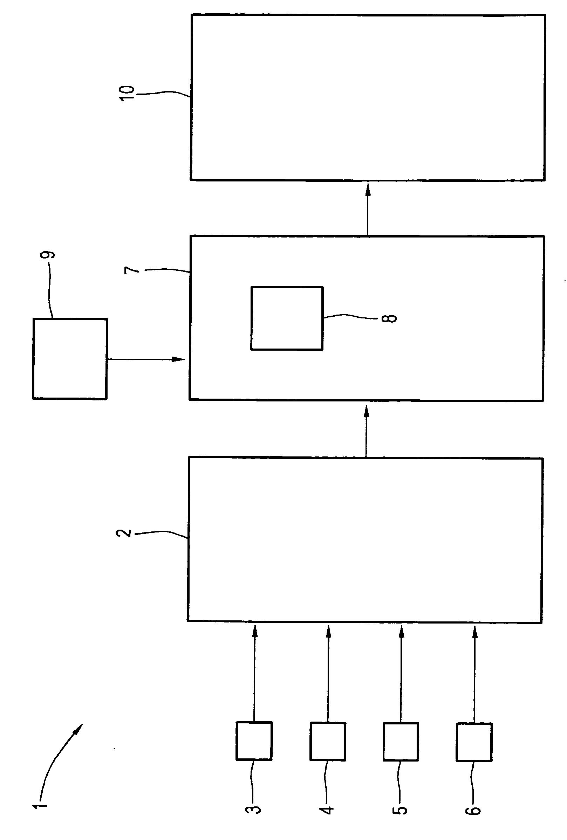

Die Erfindung wird nachfolgend anhand eines Ausführungsbeispiels unter Bezugnahme auf die Zeichnung erläutert.

Die Zeichnung ist eine schematische Darstellung und zeigt Bestandteile eines erfindungsgemäßen Fahrerassistenzsystems.

Das in der Zeichnung schematisch dargestellte Fahrerassistenzsystem 1 umfasst eine Komponente zur Umfeldwahrnehmung 2. Die Komponente zur Umfeldwahrnehmung ist mit fahrzeugeigenen Sensoren verbunden, so dass sie Sensorsignale des Umfelds erhält. In dem dargestellten Ausführungsbeispiel ist die Komponente zur Umfeldwahrnehmung 2 mit einer Kamera 3, einem Lasersensor 4, einem Radarsensor 5 und einem Navigationsgerät 6 verbunden. Die Kamera 3 liefert ein digitales Bild des Umfelds, gegebenenfalls kann die Kamera 3 mehrere Kameramodule aufweisen, so dass das Umfeld des Kraftfahrzeugs in verschiedenen Richtungen erfasst wird. Die Kamerabilder werden einer digitalen Bildauswertung unterzogen, so dass relevante Objekte erfasst werden können. In diesem Zusammenhang sind beispielsweise andere Verkehrsteilnehmer, insbesondere andere Kraftfahrzeuge, Straßen bzw. Straßenbegrenzungslinien relevante Objekte. Diese Informationen werden der Komponente für die Umfeldwahrnehmung 2 zugeführt.

Mittels des Lasersensors 4 und des Radarsensors 5 können weitere das Umfeld charakterisierende Informationen erfasst werden, insbesondere kann die Anwesenheit weiterer Kraftfahrzeuge erfasst werden. Mittels des Navigationsgeräts 6 kann der aktuelle Standort des Fahrzeugs auf einer digitalen Karte ermittelt werden, die digitale Karte ist eine Datenbank, in der unter anderem Informationen zum Straßenverlauf gespeichert sind.

Die Komponente zur Umfeldwahrnehmung 2 verarbeitet die von den verschiedenen Sensoren gelieferten Sensorsignale bzw. Informationen, so dass das Umfeld des Kraftfahrzeugs konsistent und praktisch vollständig repräsensiert wird. Diese Informationen werden mit weiteren Zustandsgrößen wie Geschwindigkeit, Beschleunigung, Lenkwinkel und dergleichen verknüpft, die von einem anderen bordeigenen System erhalten werden.

Die Komponente zur Umfeldwahrnehmung 2 berechnet daraus einen befahrbaren Bereich, es handelt sich dabei um einen Bereich der Fahrbahn bzw. des Umfelds, der gefahrlos befahren werden kann. Dieser befahrbare Bereich wird in Abhängigkeit des aktuellen Umfelds ermittelt, d. h. in Abhängigkeit des Vorhandenseins anderer Verkehrsteilnehmer, in Abhängigkeit des Straßenverlaufs und in Abhängigkeit der eigenen Fahrzeuggeschwindigkeit verändert sich der befahrbare Bereich. Falls beispielsweise keine anderen Verkehrsteilnehmer erfasst wurden, ist der befahrbare Bereich groß, bei dichtem Verkehr ist der befahrbare Bereich begrenzt.

Die Komponente zur Umfeldwahrnehmung 2 ist mit einem Fahrdynamikregler 7 verbunden, der ein Driftmodul 8 umfasst. Fahrereingaben 9 wie die Stellung des Gaspedals, eine Bremsbetätigung oder eine mittels des Lenkrads ausgewählte Wunschtrajektorie werden dem Fahrdynamikregler 7 als Eingabe zugeführt, der diese Informationen mit den von der Komponente zur Umfeldwahrnehmung 2 erhaltenen Informationen des befahrbaren Bereichs verknüpft. Das Driftmodul 8 ist in der Lage, ein oder mehrere Stellglieder des Kraftfahrzeugs so zu beeinflussen, d. h. zu steuern oder zu regeln, dass eine Driftbewegung des Fahrzeugs erlaubt wird. In dem dargestellten Ausführungsbeispiel handelt es sich bei den Stellgliedern 10 (Aktoren) um ein adaptives Dämpfersystem (ADS), einen Allradantrieb und um ein elektronisches Stabilitätsprogramm (ESP). Der Fahrdynamikregler 7 legt mittels des Driftmoduls 8 die Parameter für eine Driftbewegung fest und übermittelt den Aktoren 10 entsprechende Stellanforderungen, so dass die gewünschte Driftbewegung erlaubt und gesteuert wird. Voraussetzung für eine Driftbewegung ist jedoch, dass keine Kollisionsgefahr besteht, d. h. der von der Komponente zur Umfeldwahrnehmung 2 ermittelte befahrbare Bereich muss ausreichend groß sein. Eine Driftbewegung kann entweder durch die Fahrereingaben 9 initiiert werden, alternativ kann auch durch den Fahrdynamikregler 7 ein Drift ausgelöst werden, der mittels der Stellglieder 10 umgesetzt wird, wobei natürlich ebenfalls der von der Komponente zur Umfeldwahrnehmung 2 ermittelte befahrbare Bereich berücksichtigt wird.

Die Komponente zur Umfeldwahrnehmung 2 ist auch während einer Driftbewegung aktiv, so dass der Fahrdynamikregler 7 unverzüglich eingreifen kann, wenn die Gefahr einer Kollision oder die Gefahr des Verlassens des befahren Bereichs besteht, um durch die Betätigung der Stellglieder 10 die Driftbewegung abzubremsen oder zu stoppen.

## Patentansprüche

1. Fahrerassistenzsystem für ein Kraftfahrzeug, mit einem wenigstens eine Fahrzustandsgröße des Kraftfahrzeugs steuernden oder regelnden Fahrdynamikregler,
**dadurch gekennzeichnet,**
**dass** das Fahrerassistenzsystem (1) so ausgebildet ist, dass bei der Steuerung oder Regelung durch den Fahrdynamikregler (7) von fahrzeugeigenen Sensoren bereitgestellte Umfelddaten berücksichtigt werden, um eine Driftbewegung des Kraftfahrzeugs zu erlauben und zu steuern.

2. Fahrerassistenzsystem nach Anspruch 1,
**dadurch gekennzeichnet,**
**dass** das Kraftfahrzeug wenigstens einen der folgenden Umfelddaten erfassenden Sensor umfasst: Kamera (3), Laser (4), Radar (5), Ultraschallsensor, Navigationsgerät (6).

3. Fahrerassistenzsystem nach Anspruch 1 oder 2,
**dadurch gekennzeichnet,**
**dass** es zum Bestimmen eines befahrbaren Bereichs des aktuellen Umfelds ausgebildet ist, der von dem Fahrdynamikregler (7) berücksichtigt wird.

4. Fahrerassistenzsystem nach einem der folgenden Ansprüche,
**dadurch gekennzeichnet,**
**dass** der Fahrdynamikregler (7) zum Steuern oder Regeln der wenigstens einen Fahrzustandsgröße mit wenigsten einem der folgenden Systeme zusammenwirkt: einem adaptiven Dämpfersystem (ADS), einem steuerbaren Allradantrieb, einem elektronischen Stabilitätsprogramm (ESP), einer Motorsteuerung.

5. Fahrerassistenzsystem nach Anspruch 4,
**dadurch gekennzeichnet,**
**dass** es zum Verändern von Parametern oder Grenzwerten des mit dem Fahrdynamikregler (7) zusammenwirkenden Systems in Abhängigkeit der Umfelddaten ausgebildet ist.

6. Kraftfahrzeug,
**dadurch gekennzeichnet,**
**dass** es ein Fahrerassistenzsystem nach einem der Patentansprüche 1 bis 6 aufweist.

7. Verfahren für den Betrieb eines Fahrerassistenzsystems für ein Kraftfahrzeug, mit einem wenigstens eine Fahrzustandsgröße des Kraftfahrzeugs steuernden oder regelnden Fahrdynamikregler,
**dadurch gekennzeichnet,**
**dass** bei der Steuerung oder Regelung durch den Fahrdynamikregler von fahrzeugeigenen Sensoren bereitgestellte Umfelddaten berücksichtigt werden, um eine Driftbewegung des Kraftfahrzeugs zu erlauben und zu steuern.

## Claims

1. Driver assistance system for a motor vehicle, having a road handling controller which controls or regulates at least one driving condition variable of the vehicle,
**characterised in that** the driver assistance system (1) is configured so that environmental data provided by on-board sensors are taken into consideration during the control or regulation by the road handling controller (7) in order to allow and control a drifting movement of the vehicle.

2. Driver assistance system according to claim 1,
**characterised in that** the vehicle comprises at least one of the following sensors which detect environmental data: a camera (3), laser (4), radar (5), ultrasonic sensor, navigation device (6).

3. Driver assistance system according to claim 1 or 2,
**characterised in that** it is configured to determine a drivable zone of the present environment, which is taken into consideration by the road handling controller (7).

4. Driver assistance system according to one of the following claims,
**characterised in that** the road handling controller (7) co-operates with at least one of the following systems in order to control or regulate the at least one driving condition variable: an adaptive damping system (ADS), a controllable all wheel drive, an electronic stability programme (ESP), an engine management system.

5. Driver assistance system according to claim 4,
**characterised in that** it is configured to change parameters or thresholds of the system cooperating with the road handling controller (7) as a function of the environmental data.

6. Motor vehicle,
**characterised in that** it comprises a driver assistance system according to one of claims 1 to 6.

7. Method for operating a driver assistance system for a motor vehicle, having a road handling controller which controls or regulates at least one driving condition variable of the vehicle,
**characterised in that** environmental data provided by on-board sensors are taken into consideration during the control or regulation by the road handling controller in order to allow and control a drifting movement of the vehicle.

## Revendications

1. Système d'assistance au conducteur pour un véhicule à moteur, comprenant un régulateur de dynamique de conduite commandant ou régulant au moins une grandeur d'état de conduite,
**caractérisé en ce que** :
le système d'assistance au conducteur (1) est conçu de sorte que, lors de la commande ou de la régulation par le régulateur de dynamique de conduite (7), on tient compte de données ambiantes fournies par des capteurs propres au véhicule pour autoriser et commander un mouvement de dérive du véhicule automobile.

2. Système d'assistance au conducteur selon la
revendication 1,
**caractérisé en ce que** :
le véhicule automobile comprend au moins l'un des capteurs suivants d'acquisition de données ambiantes : une caméra (3), un laser (4), un radar (5), un capteur ultrasonique et un appareil de navigation (6).

3. Système d'assistance au conducteur selon la revendication 1 ou la revendication 2,
**caractérisé en ce que** :
il est conçu pour déterminer une zone praticable du milieu ambiant courant qui est prise en compte par le régulateur de dynamique de conduite (7).

4. Système d'assistance au conducteur selon l'une quelconque des revendications précédentes,
**caractérisé en ce que** :
le régulateur de dynamique de conduite (7) coopère, pour commander ou réguler la au moins une grandeur d'état de conduite, avec au moins l'un des systèmes suivants : un système d'amortissement adaptatif (ADS), une traction 4 x 4 commandable, un programme de stabilité électronique (ESP) et une commande motrice.

5. Système d'assistance au conducteur selon la revendication 4,
**caractérisé en ce que** :
il est conçu pour modifier des paramètres ou des valeurs limites du système coopérant avec le régulateur de dynamique de conduite (7) en fonction des données ambiantes.

6. Véhicule automobile,
**caractérisé en ce que** :
il présente un système d'assistance au conducteur selon l'une quelconque des revendications 1 à 6.

7. Procédé de fonctionnement d'un système d'assistance au conducteur pour un véhicule automobile, comprenant un régulateur de dynamique de conduite commandant ou régulant au moins une grandeur d'état de conduite du véhicule automobile,
**caractérisé en ce que** :
lors de la commande ou de la régulation par le régulateur de dynamique de conduite, on tient compte de données ambiantes fournies par des capteurs propres au véhicule pour autoriser et commander un déplacement de dérive du véhicule automobile.
